(19) **Europäisches Patentamt**

**European Patent Office**

**Office européen des brevets**

(11) **EP 1 474 813 B1**

(12) **FASCICULE DE BREVET EUROPEEN**

(45) Date de publication et mention
de la délivrance du brevet:
**29.06.2005 Bulletin 2005/26**

(51) Int Cl.⁷: **H01F 1/147**, C22C 38/40,
C22C 38/42, C22C 38/44,
C22C 38/52

(21) Numéro de dépôt: **03722656.0**

(22) Date de dépôt: **14.02.2003**

(86) Numéro de dépôt international:
**PCT/FR2003/000492**

(87) Numéro de publication internationale:
**WO 2003/069638 (21.08.2003 Gazette 2003/34)**

(54) **ALLIAGE MAGNETIQUE DOUX POUR HORLOGERIE**

WEICHMAGNETISCHE LEGIERUNG ZUR UHRENHERSTELLUNG

SOFT MAGNETIC ALLOY FOR CLOCK-MAKING

(84) Etats contractants désignés:
**CH DE FR GB LI**

(30) Priorité: **15.02.2002 FR 0201900**

(43) Date de publication de la demande:
**10.11.2004 Bulletin 2004/46**

(73) Titulaire: **Imphy Alloys**
**92800 Puteaux (FR)**

(72) Inventeurs:
• **WAECKERLE, Thierry**
**F-58000 NEVERS (FR)**
• **FRAISSE, Hervé**
**F-58000 NEVERS (FR)**
• **BOULOGNE, Bruno**
**F-58000 SECHOISE (FR)**

(74) Mandataire: **Lagrange, Jacques et al**
**Cabinet Lavoix**
**2, place d'Estienne d'Orves**
**75441 Paris Cedex 09 (FR)**

(56) Documents cités:
EP-A- 0 827 256        EP-A- 1 041 168
FR-A- 2 777 912        FR-A- 2 811 684
US-A- 2 668 944        US-A- 5 783 145

• **PATENT ABSTRACTS OF JAPAN vol. 2000, no.
04, 31 août 2000 (2000-08-31) -& JP 2000 008148
A (DAIDO STEEL CO LTD;TOHOKU
TOKUSHUKO KK), 11 janvier 2000 (2000-01-11)**
• **PATENT ABSTRACTS OF JAPAN vol. 015, no.
263 (C-0847), 4 juillet 1991 (1991-07-04) -& JP 03
090545 A (AICHI STEEL WORKS LTD;OTHERS:
01), 16 avril 1991 (1991-04-16)**

**Description**

La présente invention est relative à un alliage magnétique doux et à son utilisation dans un moteur pour horlogerie.

Le mouvement des aiguilles des montres à quartz analogiques est assuré par un moteur électrique miniature connu sous le nom de moteur pas à pas de type LAVET(voir figure 1). Ce moteur comprend un rotor bipolaire 1 constitué d'un aimant permanent, d'un stator 2 découpé dans une bande d'alliage magnétique doux et d'un noyau bobiné 3 en alliage magnétique doux éventuellement différent de celui dont est constitué le stator. Le stator comporte des isthmes 4 et 5 qui doivent être les plus fins possible.

Pour fabriquer le stator d'un moteur électrique d'horlogerie, on connaît les alliages magnétiques doux du type alliage à 80% de nickel contenant quelques % de molybdène ou de cuivre, ou du type alliage du type Fe-36,5Ni-7,5Cr, ou encore du type alliage Fe-50Ni-10Cr. Ces alliages ont un champ coercitif inférieur à 100 mOe pour des épaisseurs comprises entre 0,4 et 0,8 mm, dans la plage de température allant de - 20°C à + 70°C, et une induction à saturation Bs supérieure à 4000 Gauss à 40°C. Mais, ces alliages sont chers et il est souhaitable de disposer d'un alliage moins cher: Cependant, un tel alliage n'est pas connu.

Le but de la présente invention est de proposer un alliage magnétique doux apte à la fabrication d'un stator de moteur électrique d'horlogerie, moins cher que les alliages connus.

A cet effet, l'invention a pour objet un alliage magnétique doux dont la composition comprend, en % en poids :

$$28\% \leq Ni < 34\%$$

$$0\% \leq Co \leq 4\%$$

$$0\% \leq Cu \leq 4\%$$

$$1\% \leq Cr$$

$$0\% \leq Mo \leq 8\%$$

$$0\% \leq Nb < 1\%$$

$$0\% \leq Mn < 2\%$$

$$0\% \leq V < 5\%$$

$$0\% \leq W < 5\%$$

$$0\% \leq Si < 4\%$$

$$0\% \leq Al < 4\%$$

$$0\% \leq C \leq 0,4\%$$

éventuellement, un ou plusieurs éléments pris parmi le magnésium et le calcium en des teneurs telles que leur somme reste inférieure à 0,1%, le reste étant du fer et des impuretés résultant de l'élaboration, la composition chimique satisfaisant en outre les relations :

$$180,5 \leq 6 \times Ni - 2,5 \times (Cr + Mo + V + W + Si + Al) + 4 \times (Co + Cu) \leq 197,5$$

et

$$Co + Cu \leq 4\ \%$$

De préférence, l'alliage contient plus de 2% de chrome, de préférence également, il contient plus de 1,5%, voire plus de 2% de molybdène.

L'invention concerne également un stator de moteur électrique d'horlogerie constitué d'un alliage selon l'invention et le stator d'un tel moteur.

L'invention va maintenant être décrite plus en détails.

La figure 1 représente un moteur électrique de montre du type LAVET.

L'alliage selon l'invention contient en % en poids :

- entre 28 et 34% de nickel, élément nécessaire pour obtenir de bonnes caractéristiques magnétiques, mais cependant très coûteux,
- de 0% à 4% de cobalt et/ou de cuivre, la somme de ces deux éléments restant inférieur ou égale à 4%, pour obtenir de bonnes propriétés magnétiques ; Ces deux éléments ont un effet significatif et avantageux comme le nickel sur les propriétés magnétiques et permettent de limiter le %Ni. De plus le cuivre est beaucoup moins cher que le nickel,
- au plus 0,4% de carbone pour ne pas dégrader les propriétés magnétiques,
- au moins 1% de chrome, et de préférence, plus de 2%, afin d'obtenir une bonne résistance à la corrosion, mais de préférence moins de 7,5% et de façon plus particulièrement préférée moins de 6,5%,
- éventuellement jusqu'à 1% de niobium pour améliorer les caractéristiques mécaniques,
- éventuellement du molybdène, du vanadium, du tungstène, du silicium ou de l'aluminium, en des teneurs inférieures à 8% pour Mo, 5% pour V et W, 4% pour Si et Al, afin d'accroître la résistivité et les performances magnétiques (en particulier le champ coercitif); de préférence, la teneur en molybdène doit être supérieure à 1,5, voire à 2% afin d'améliorer les caractéristiques mécaniques et ainsi réduire la section des isthmes 4 et 5 (et donc accroître le rendement du moteur) tout en conservant la même stabilité géométrique du stator. En outre, une teneur supérieure à 1,5% en molybdène permet d'éviter toute oxydation et/ou coloration intempestive lors du recuit sous $NH_3$.
- jusqu'à 2 % de manganèse pour accroître l'aptitude à la transformation à chaud et les performances magnétiques,
- éventuellement, un ou plusieurs éléments pris parmi le magnésium et le calcium en des teneurs telles que leur somme reste inférieure à 0,1%, afin d'améliorer l'aptitude à la découpe mécanique.

Le reste de la composition est constitué de fer et d'impuretés résultant de l'élaboration. Parmi ces impuretés peut notamment se trouver le titane que l'on préfère limiter à moins de 0,003%, de préférence à moins de 0,002%, et de façon plus particulièrement préférée à moins de 0,001%, car il est néfaste à une utilisation dans le domaine de l'horlogerie. En effet, les présents inventeurs ont constaté que la présence de cet élément pouvait provoquer une augmentation importante du champ coercitif à l'issue du recuit, ce qui n'est pas souhaitable pour ces applications.

En outre, et afin d'obtenir des caractéristiques magnétiques permettant de fabriquer un stator de moteur électrique d'horlogerie miniature, c'est à dire un champ coercitif Hc entre - 20°C et + 70°C inférieur à 100 mOe et une induction à saturation Bs à 40°C pour une induction de 40 Oe, supérieure à 4000 Gauss, la composition chimique de l'alliage doit satisfaire la condition :

$$180,5 \leq 6 \times Ni - 2,5 \times (Cr + Mo + V + W + Si + Al) + 4 \times (Co + Cu) \leq 197,5$$

Outre les propriétés magnétiques qui viennent d'être indiquées, l'alliage a une très bonne résistance à la corrosion aqueuse acide. Cette résistance à la corrosion peut être mesurée en mesurant le courant maximal Imax qui circule entre une électrode constituée de l'alliage et une électrode de référence en platine plongées dans une solution d'acide sulfurique dans l'eau ayant une concentration de 0,01 Mole/litre lorsqu'on fait varier la tension entre les deux électrodes. Avec la composition définie ci-dessus, le courant Imax reste inférieur à 3 mA.

L'alliage peut être élaboré par tout moyen connu, par exemple, au four à induction ou au four à arc sous laitier, puis après solidification, être laminé à chaud et à froid pour obtenir par exemple des bandes dans lesquelles on découpe des pièces qui sont recuites, par exemple, soit en statique entre 1100°C et 1200°C pendant 1 à 10 heures sous atmosphère réductrice (par exemple, sous hydrogène), soit au défilé entre 1000°C et 1100°C pendant 5 à 30 mn, sous une atmosphère réductrice.

A titre d'exemples et de comparaisons, on a réalisé les alliages dont la composition et les caractéristiques mécaniques sont reportées dans le tableau 1.

Les exemples 2, 3, 5 à 7, 9, 10 et 14 à 15 correspondent à l'invention. Les exemples 1, 4, 8, 11 à 13 et 18 à 20 sont donnés à titre de comparaison. Pour ces exemples, le reste de la composition est du fer et des impuretés.

Pour ces exemples, l'alliage a été élaboré par fusion par induction sous vide et coulé sous forme de lingots qui ont été forgés entre 1000°C et 1200°C, laminés à chaud entre 1150°C et 800°C pour obtenir des bandes de 4,5mm d'épaisseur. Ces bandes ont été décapées, laminées à froid sans recuit intermédiaire jusqu'à une épaisseur de 0,6 mm, puis découpées en rondelles de 36 et 25 mm de diamètre qui ont été recuites à 1170°C pendant 4 heures sous hydrogène.

On a alors mesuré le champ coercitif Hc à - 20°C et + 70°C, l'induction à saturation Bs à 40°C sous un champ de 40 Oerstedt, et le courant maximal de corrosion Imax dans une solution aqueuse d'acide sulfurique contenant 0,01 mole par litre.

Tableau 1

| N° | Ni | Cr | Mn | Co | Mo | Cu | Nb | C | 6Ni-2.5X+4 (Co +Cu)* | Hc mOe -20°C | Hc mOe 70°C | Bs (en G) à 40°C | Imax mA | |
|---|---|---|---|---|---|---|---|---|---|---|---|---|---|---|
| 2 | 33,46 | 4,88 | 0,133 | 0.014 | 0,014 | 0.01 | <0.01 | 0,0068 | 188,62 | 59,5 | 26 | 6950 | 0,50 | inv |
| 3 | 33,66 | 7,95 | 0,188 | 0,01 | 0,01 | 0,01 | <0.01 | 0,0041 | 182,14 | 26 | 9,5 | 4500 | 0,60 | inv |
| 5 | 33,7 | 8 | 0,187 | 2,07 | 0,01 | 0,01 | <0.01 | 0,0066 | 190,50 | 56 | 18 | 5950 | 0,65 | inv |
| 6 | 33,8 | 8,23 | 0,192 | 2,06 | 0,01 | 0,01 | 0,2 | 0,0070 | 190,48 | 43,5 | 13,5 | 5500 | 0,70 | inv |
| 7 | 33,94 | 2.01 | 0,172 | 0,026 | 5,79 | 0,01 | <0.01 | 0,0074 | 184,28 | 37 | 13 | 4600 | 1,60 | inv |
| 9 | 31,84 | 8,23 | 0,174 | 3.07 | 0,01 | 0,01 | <0.01 | 0,0150 | 182,76 | 23.5 | 7 | 4700 | 0,70 | inv |
| 10 | 33,55 | 8,17 | 0,172 | 0,014 | 0,01 | 0,01 | <0.01 | 0,0160 | 180,95 | 14,5 | 5,5 | 4150 | 0,70 | inv |
| 14 | 33,78 | 2,02 | 0,186 | 0,01 | 2,03 | 0,01 | <0.01 | 0.0150 | 192,64 | 39,5 | 19 | 7350 | 1,60 | inv |
| 15 | 33,78 | 1,02 | 0,183 | 0,01 | 1,21 | 0,01 | <0.01 | 0,0130 | 197,19 | 42,5 | 24 | 8150 | 2,50 | inv |
| 16 | 31,68 | 8,03 | 0,176 | 0,01 | 0,027 | 2,97 | <0.01 | 0,0120 | 181,86 | 42 | 13 | 4700 | 0,65 | inv |
| 17 | 30,14 | 2,09 | 0,193 | 0,01 | 0,01 | 2,99 | <0.01 | 0,0130 | 187,59 | 43 | 21 | 6550 | 1,60 | inv |
| 1 | 33,96 | 2,64 | 0,259 | 1,96 | 0,01 | 0,01 | <0.01 | 0,0089 | 205,02 | 120 | 58 | 9800 | 1,20 | comp |
| 4 | 33,83 | 5,1 | 0,152 | 2,02 | 0,01 | 0.01 | <0.01 | 0,0067 | 198,33 | 107 | 34,5 | 8400 | 0,50 | comp |
| 8 | 32,29 | 1,87 | 0,166 | 0,01 | 0,082 | 3,92 | <0.01 | 0,0083 | 204,58 | 108,5 | 44,5 | 9650 | 1,70 | comp |
| 11 | 31,84 | 8,2 | 0,173 | 0,011 | 0,01 | 0,01 | <0.01 | 0,0150 | 170,60 | 12 | - | 500 | 0,70 | comp |
| 12 | 30,09 | 2,06 | 0,162 | 0,007 | 0,01 | 0,01 | <0.01 | 0,0140 | 175,43 | 31,5 | - | 300 | 1,60 | comp |
| 13 | 33,8 | 8,14 | 0,172 | 0,011 | 0,01 | 0,01 | <0.01 | 0,479 | 182,51 | 105,5 | 52,5 | 5200 | 0,70 | comp |
| 18 | 32,2 | 0.71 | 0,223 | 0,01 | 0,01 | 0,01 | <0.01 | 0,0130 | 191,48 | 38 | 22 | 8300 | 3,60 | comp |
| 19 | 30.5 | 0,42 | 0,195 | 0,01 | 1,63 | 2,2 | <0.01 | 0,0140 | 186,72 | 44 | 24 | 6800 | 4,10 | comp |
| 20 | 30,9 | 8,95 | 0,177 | 0,01 | 0,01 | 3,9 | <0.01 | 0,0130 | 178,64 | 35 | 11 | 3500 | 0,90 | comp |

*Dans la formule 6 x Ni - 2,5 x X + 4 x (Co + Cu), X = Cr + Mo + V + W + Si + Al

Ces exemples montrent que, dans le domaine de composition correspondant à l'invention, l'alliage satisfait aux conditions requises pour fabriquer un stator de moteur électrique de montre, à savoir Hc < 100mOe entre - 20°C et + 70°C, Bs > 4000 G, Imax < 3 mA, alors que hors de ce domaine, ces conditions ne sont pas satisfaites.

Notamment, pour les contre-exemples 1, 4, 8 et 13, les teneurs en nickel, cobalt, cuivre et chrome sont telles que 6 x Ni - 2,5 x X + 4 x (Co + Cu) > 197,5, et dans ces conditions, Hc à - 20°C est supérieur à 100 mOe.

Pour les contre-exemples 11, 12 et 20, les teneurs en nickel, cobalt, cuivre et chrome sont telles que 6 x Ni - 2,5 x X + 4 x (Co + Cu) < 180,5, et dans ces conditions, Bs est inférieur à 4000 Gauss.

Pour les contre-exemples 18 et 19, les teneurs en chrome sont trop faibles, et Imax est supérieur à 3 mA, ce qui correspond à une résistance à la corrosion insuffisante.

On a réalisé également les exemples suivants d'alliages plus particulièrement bien adaptés à la fabrication de stators de moteurs de montre :

1. alliage Fe-Ni33,7-Cr8-Mn0,3, contenant environ 33,7% de nickel, 8% de chrome, 0,3% de manganèse, le reste étant du fer et des impuretés résultant de l'élaboration. Avec cet alliage on a réalisé des rondelles dans les mêmes conditions que pour les exemples précédents. Les caractéristiques obtenues étaient :

Bs = 4500 G, Hc = 26 mOe à - 20°C et 9,5 mOe à 70°C, Imax = 0,6 mA
Cet alliage économique a l'avantage de ne pas contenir de cuivre ni de cobalt, ce qui facilite le recyclage des chutes.

2. alliage Fe-Ni33,8-Cr2-Mo6-Mn0,3 qui contient environ 33,8% de nickel, 2% de chrome, 6% de molybdène, 0,3% de manganèse, le reste étant du fer et des impuretés. Dans les mêmes conditions que pour les exemples précédents, les caractéristiques obtenues étaient :

Bs = 4200 G, Hc = 38 mOe à - 20°C et 15 mOe à 70°C, Imax = 1,6 mA
Cet alliage économique a une résistance mécanique renforcée de 20% (Gain de Résistance max de 80 Mpa après recuit à 1170°C) par rapport à l'exemple précédent sans molybdène ce qui permet de réaliser des stators avec des isthmes plus fins et des pertes magnétiques réduites (donc des moteurs pas à pas avec un meilleur rendement ou une consommation moindre de la pile de la montre).

3. alliage Fe-Ni33,5-Cr5-Mn0,3, contenant environ 33,7% de nickel, 8% de chrome, 0,3% de manganèse, le reste étant du fer et des impuretés résultant de l'élaboration. Avec cet alliage on a réalisé des rondelles dans les mêmes conditions que pour les exemples précédents. Les caractéristiques obtenues étaient :

Bs = 6950 G, Hc = 59,5 mOe à - 20°C et 26 mOe à 70°C, Imax = 0,5 mA
Cet alliage économique a l'avantage d'avoir une induction à saturation Bs élevée, ce qui permet de l'utiliser à la place des alliages du type Fe-Ni80 sans avoir à redimensionner les moteurs.

4. alliage Fe-Ni30-Cr2-Cu3,7-Mn0,2 qui contient environ 30% de nickel, 2% de chrome, 3,7% de cuivre, 0,2% de manganèse, le reste étant du fer et des impuretés. Dans les mêmes conditions que pour les exemples précédents, les caractéristiques obtenues étaient :

Bs = 7400 G, Hc = 45 mOe à - 20°C et 24 mOe à 70°C, Imax = 1,6 mA
Cet alliage particulièrement économique puisqu'il contient 30% de nickel seulement et environ 4% de cuivre, peut, du fait de ses caractéristiques magnétiques, se substituer à tout alliage connu de l'art antérieur sans avoir à redimensionner les moteurs.

## Revendications

**1.** Alliage magnétique doux dont la composition comprend, en% en poids :

$$28\% \leq Ni < 34\%$$

$$0\% \leq Co \leq 4\%$$

$$0\% \leq Cu \leq 4\%$$

$$1\% \leq Cr$$

$$Q\% \leq Mo \leq 8\%$$

$$0\% \leq Nb < 1\%$$

$$0\% \leq Mn < 2\%$$

$$0\% \leq V < 5\%$$

$$0\% \leq W < 5\%$$

$$0\% \leq Si < 4\%$$

$$0\% \leq Al < 4\%$$

$$0\% \leq C \leq 0,4\%$$

éventuellement, un ou plusieurs éléments pris parmi le magnésium et le calcium en des teneurs telles que leur somme reste inférieure à 0,1%, le reste étant du fer et des impuretés résultant de l'élaboration, la composition chimique satisfaisant en outre les relations :

$$180,5 \leq 6 \times Ni - 2,5 \times (Cr + Mo + V + W + Si + Al) + 4 \times (Co + Cu) \leq 197,5$$

et

$$Co + Cu < 4 \%$$

2. Alliage selon la revendication 1, dont la composition est en outre telle que :

$$Cr \geq 2\%$$

3. Alliage selon la revendication 1 ou la revendication 2, dont la composition est en outre telle que :

$$Mo \geq 1,5\%$$

4. Alliage selon l'une quelconque des revendications 1 à 3, **caractérisé en outre en ce que** :

$$Cr \leq 7,5\%$$

5. Alliage selon l'une quelconque des revendications 1 à 4, **caractérisé en o****utre en ce qu**'il comprend moins de 0,003% de titane.

6.  Alliage selon la revendication 5, **caractérisé en outre en ce qu'**il comprend moins de 0,002% de titane.

7.  Moteur électrique d'horlogerie dont le stator est constitué d'un alliage magnétique doux selon l'une quelconque des revendications 1 à 6.

8.  Stator de moteur électrique d'horlogerie constitué d'un alliage magnétique doux selon l'une quelconque des revendications 1 à 6.

**Patentansprüche**

1.  Weichmagnetische Legierung, deren Zusammensetzung in Gew.-% umfasst:

$$28 \ \% \leq Ni < 34 \ \%$$

$$0 \ \% \leq Co \leq 4 \ \%$$

$$0 \ \% \leq Cu \leq 4 \ \%$$

$$1 \ \% \leq Cr$$

$$0 \ \% \leq Mo \leq 8 \ \%$$

$$0 \ \% \leq Nb < 1 \ \%$$

$$0 \ \% \leq Mn < 2 \ \%$$

$$0 \ \% \leq V < 5 \ \%$$

$$0 \ \% \leq W < 5 \ \%$$

$$0 \ \% \leq Si < 4 \ \%$$

$$0 \ \% \leq Al < 4 \ \%$$

$$0 \ \% \leq C \leq 0,4 \ \%$$

wobei eventuell ein oder mehrere Elemente, umfassend Magnesium und Calcium, in Gehalten, derart, dass ihre Summe kleiner als 0,1 % bleibt, vorhanden sind, wobei der Rest Eisen und aus der Herstellung resultierende Verunreinigungen sind, wobei die chemische Zusammensetzung außerdem die folgenden Beziehungen erfüllt:

$$180,5 \leq 6 \ x \ Ni - 2,5 \ x \ (Cr + Mo + V + W + Si + Al) + 4 \ x \ (Co + Cu) \leq 197,5$$

und

$$Co + Cu < 4\ \%.$$

2. Legierung nach Anspruch 1, deren Zusammensetzung außerdem derart ist, dass:

$$Cr \geq 2\ \%.$$

3. Legierung nach Anspruch 1 oder Anspruch 2, deren Zusammensetzung außerdem derart ist, dass:

$$Mo \geq 1,5\ \%.$$

4. Legierung nach einem der Ansprüche 1 bis 3, **dadurch gekennzeichnet, dass** außerdem:

$$Cr \leq 7,5\ \%.$$

5. Legierung nach einem der Ansprüche 1 bis 4, **dadurch gekennzeichnet, dass** sie außerdem wenigstens 0,003 % Titan enthält.

6. Legierung nach Anspruch 5, **dadurch gekennzeichnet, dass** sie außerdem wenigstens 0,002 % Titan enthält.

7. Elektromotor für Zeitmessgerät, dessen Stator aus einer weichmagnetischen Legierung nach einem der Ansprüche 1 bis 6 gebildet ist.

8. Stator für Elektromotor für Zeitmessgerät, der aus einer weichmagnetischen Legierung nach einem der Ansprüche 1 bis 6 gebildet ist.

**Claims**

1. Soft magnetic alloy, the composition of which comprises, in % by weight:

$$28\% \leq Ni < 34\%$$

$$0\% \leq Co \leq 4\%$$

$$0\% \leq Cu \leq 4\%$$

$$1\% \leq Cr$$

$$0\% \leq Mo \leq 8\%$$

$$0\% \leq Nb < 1\%$$

$$0\% \leq Mn < 2\%$$

EP 1 474 813 B1

$$0\% \leq V < 5\%$$

$$0\% \leq W < 5\%$$

$$0\% \leq Si < 4\%$$

$$0\% \leq Al < 4\%$$

$$0\% \leq C \leq 0.4\%$$

possibly, one or more elements taken from magnesium and calcium in amounts such that their sum remains lower than 0.1%, the remainder being iron and impurities resulting from smelting, the chemical composition satisfying furthermore the relationships:

$$180.5 \leq 6 \times Ni - 2.5 \times (Cr + Mo + V + W + Si + Al) + 4$$

$$\times (Co + Cu) \leq 197.5$$

and

$$Co + Cu < 4\%$$

2. Alloy according to claim 1, the composition of which is furthermore such that:

$$Cr \geq 2\%$$

3. Alloy according to claim 1 or claim 2, the composition of which is furthermore such that:

$$Mo \geq 1{,}5\%$$

4. Alloy according to any one of claims 1 to 3, further **characterised in that**:

$$Cr \leq 7.5\%$$

5. Alloy according to any one of claims 1 to 4, further **characterised in that** it includes less than 0.003% titanium.

6. Alloy according to claim 5, further **characterised in that** it includes less than 0.002% titanium.

7. Electric motor for clock-making, the stator of which consists of a soft magnetic alloy according to any one of claims 1 to 6.

8. Stator of an electric motor for clock-making consisting of a soft magnetic alloy according to any one of claims 1 to 6.